# EUROPEAN PATENT APPLICATION

(11) **EP 4 582 905 A1**
(43) Date of publication of application: **09.07.2025**
(21) Application number: 24150384.6
(22) Date of filing: 04.01.2024
(51) Int. Cl.: G06F 3/00, G06F 3/12, G06F 3/14

(54) **UNIDIRECTIONAL TRANSFER OF DATA FROM SENDER TO RECEIVER**

(71) Applicant: LiveDrop B.V., 5612 WB Eindhoven (NL)
(72) Inventor: LANGENDIJK, Erno Hermanus Antonius, 5612 WB Eindhoven (NL); MOREU, Patrick Nicolaus Franciscus, 5612 WB Eindhoven (NL)
(74) Representative: DeltaPatents B.V.

(57) **Abstract**

A software component is provided for being installed on a device. The operating system of the device is configured to provide a system function to enable export of data from applications to one or more export destinations. The software component is configured to be installed on the operating system and to register as an export destination with the system function, receive an export of data of an application via the system function, generate at least one 2D barcode, wherein the 2D barcode(s) comprise an encoding of the data and/or a link to the data, and display the 2D barcode(s) on a display of the device to enable a receiver device to access the data by capturing and decoding the 2D barcode(s).

## Description

### TECHNICAL FIELD

The present disclosure relates to a software component for processing data on a device. The present disclosure further relates to the device and to a computer-implemented method for processing data on the device. The present disclosure further relates to a computer-readable medium comprising data representing the software component, and to a computer-readable medium comprising data representing instructions arranged to cause a processor system to perform the computer-implemented method.

### BACKGROUND

There are numerous ways to transfer data from a sender device to a receiver device, for example via Wi-Fi, Bluetooth, Ethernet, etc. However, often the data connections established via such wired and wireless networks are bidirectional, which brings the inherent risk that a computer virus or other type of malware is received back from the receiver device, or that vulnerabilities at the sender device are exploited by the receiver device.

One way to approach this problem is to use one-directional (or unidirectional) data communication. For example, a so-called "data diode" is a unidirectional network communication device to transmit data in only one direction. Disadvantageously, a data diode needs custom-built hardware and is therefore expensive. It further only uses temporal modulation to transmit data, which may limit the maximum achievable transmission rate from sender device to receiver device. Another means to transmit data unidirectionally is via a 2D barcode, such as a QR code. Such 2D barcodes may encode data, which data may be transmitted from a sender device to a receiver device by the sender device displaying the 2D barcode and the receiver device scanning the displayed 2D barcode to access the data.

It is known, for example from EP4300353, to sequentially display a number of 2D barcodes to transmit larger amounts of data. This greatly extends the applications and application domains in which data may be transferred unidirectionally via 2D barcodes.

Nonetheless, the unidirectional data transfer via 2D barcodes may encounter challenges in integration with current user interface paradigms and operating system functionalities. While network-based data transfer methods have been extensively optimized and are a central focus in the development of user interfaces and operating system functionalities, the technique of data transmission through 2D barcodes may not align with or integrate into existing user interface designs or the system capabilities typically offered by operating systems. This discrepancy may pose a barrier to the adoption and utilization of 2D barcode-based data transfer in various technological environments.

It is therefore an object of the invention to provide a unidirectional data transfer which addresses one or more of the above-mentioned problems.

### SUMMARY

In accordance with a first aspect of the present disclosure, a software component is provided for processing data on a device, wherein the device is configured with an operating system, wherein the operating system is configured to allow execution of applications and to provide a system function to enable export of data from the applications to one or more export destinations, wherein the one or more export destinations are selectable by a user via a user interface provided by the operating system, wherein the software component is configured to be installed on the operating system and to:
- register as an export destination with the system function;
- receive an export of data of an application via the system function;
- generate at least one 2D barcode, wherein the at least one 2D barcode comprises an encoding of the data and/or a link to the data; and
- display the at least one 2D barcode on a display of the device to enable a receiver device to access the data by capturing and decoding the at least one 2D barcode.

In accordance with a further aspect of the present disclosure, a device is provided comprising a memory, a processor system and a display, wherein the device is configured with an operating system, wherein the operating system is configured to allow execution of applications and to provide a system function to enable export of data from the applications to one or more export destinations, wherein the one or more export destinations are selectable by a user via a user interface provided by the operating system, wherein the memory comprises data representing the software component, wherein the processor system is configured to, using the operating system, install and execute the software component.

In accordance with a further aspect of the present disclosure, a computer-implemented method is provided for processing data on a device, wherein the device is configured with an operating system, wherein the operating system is configured to allow execution of applications and to provide a system function to enable export of data from the applications to one or more export destinations, wherein the one or more export destinations are selectable by a user via a user interface provided by the operating system, wherein the computer-implemented method comprises, at the device:
- registering as an export destination with the system function;
- receiving an export of data of an application via the system function;
- generating at least one 2D barcode, wherein the at least one 2D barcode comprises an encoding of the data and/or a link to the data; and
- displaying the at least one 2D barcode on a display of the device to enable a receiver device to access the data by capturing and decoding the at least one 2D barcode.

In accordance with a further aspect of the present disclosure, a transitory or non-transitory computer-readable medium is provided, wherein the computer-readable medium comprises data defining the software component as defined in the present disclosure.

In accordance with a further aspect of the present disclosure, a transitory or non-transitory computer-readable medium is provided, wherein the computer-readable medium comprises data representing instructions arranged to cause a processor system to perform the computer-implemented method as defined in the present disclosure.

The presently disclosed measures involve transferring data unidirectionally from a sender device to a receiver device. The sender device may comprise a display or may be connected to a display. For example, the sender device may be a computer such as a laptop or desktop PC or a mobile device such as a smartphone or tablet. The receiver device may comprise or may be connected to an image sensor. The image sensor may be part of a camera module which, in addition to the image sensor, may also comprise one or more optical components including one or more lenses. The receiver device may for example be a mobile device such as a smartphone, tablet, or a pair of smart glasses.

The sender device may comprise or have access to data which is to be transferred to the receiver device. Such data may take various forms, including but not limited to text data, image data, audio data, etc. To enable such data to be transferred unidirectionally to the receiver device, and thereby without direct bidirectional communication between the sender device and the receiver device, a software component may be installed on the sender device which is capable of registering as an export destination with a system function of the operating system of the sender device. This aspect of the present disclosure may be explained as follows: operating systems typically allow applications to be installed, such as text editing applications (e.g., Microsoft Word) and communication applications (e.g., Microsoft Outlook or Lotus Notes) but also specialist applications. For example, in the medical field, specialist applications may include diagnostic imaging applications, clinical decision support applications, telemedicine applications, etc. On mobile devices, such applications may also be referred to as `apps', while on computers, such applications may also be referred to as 'software packages' or `software programs'. It is desirable to enable such applications to export data to different export destinations in a centralized manner. For this purpose, modern operating systems may provide one or more system functions which enable the export of data from an application to one or more export destinations. The export destination themselves may be selectable by a user via a user interface provided by the operating system. In other words, there may be a unified interface which may enable a user to select to which one or more destinations the data is to be exported by the application.

A specific example of such a system function may be a print system function which enables printing of data from an application to one or more printers (with a printer being an export destination). Another example of a system function is a sharing interface, such as an iOS share sheet-based interface or an Android share intent-based interface. In general, the export destinations may include other applications, other devices, other services, etc.

The inventors have recognized that such a system function may be used to enable unidirectional transmission of data via 2D barcode(s). For that purpose, a software component is provided which may be configured to register as an export destination with the system function and which may be configured to receive an export of data of an application via the system function. For example, the software component may be a driver for the operating system, a plug-in for the system function, or a stand-alone application capable of interfacing with the system function. Upon receiving an export of data, the software component may generate at least one 2D barcode which comprises an encoding of the data and/or a link to the data and display the 2D barcode(s) on a display to enable the receiver device to access the data by capturing and decoding the at least one 2D barcode.

The presently disclosed measures may be advantageously applied in situations where a certain amount of data transfer is needed, and other methods of data transfer are not available (e.g., no Wi-Fi) or not an option due to security concerns (e.g., military, or medical field) or other available data transfer means cannot transfer enough data (typically for conventional static QR codes). The above measures may for example be used in the medical field to transmit patient data such as an X-ray image from doctor to patient without the risk of infecting the doctor's computer with a computer virus from the smartphone of a patient. Simultaneously, the unidirectional transfer of data is accessible in a user-friendly manner, as the presently disclosed measures negate the necessity for manual initiation and data import into an application generating the 2D barcode(s). Namely, without these measures, a user may be required to manually start an application generating the 2D barcode(s), manually select data to be transmitted (e.g., by selecting a file), etc. By way of the above measures, the 2D barcode generation may be seamlessly initiated by the originating application that contains or produces the data to be transmitted. This approach lowers the barriers to the adoption and efficient use of 2D barcode-based data transfer.

While the following embodiments are described in relation to the software component, they equally apply to the device and the computer-implemented method.

In an embodiment, the software component is further configured to generate and display a sequence of 2D barcodes which together comprise the encoding of the data. In accordance with the above measures, the data may be transmitted from the sender device to the receiver device as a sequence of 2D barcodes and thereby in form of a video-version of a 2D barcode. This may increase the amount of data which can be transferred in comparison to using only a 2D barcode as a still image. Advantageously, the spatial resolution of the 2D barcodes does not need to be as high as the spatial resolution needed when using only a still image. In some embodiments, the transmission rate may be further increased by making use of different primary colors of the display.

In an embodiment, the software component is further configured to, based on a characteristic of the data or a setting, switch between including, in the at least one 2D barcode, i) the encoding of the data and ii) the link to the data. The software component may thus be capable of using different transfer mechanisms for the transfer of the data. These transfer mechanisms may include sending the data via the 2D barcode(s) itself, sending a link to the data via the 2D barcode(s), and a combination of both. The type of transfer mechanism may be determined on characteristics of the data to be transmitted and/or a setting. For example, the characteristic of the data may be a size of the data. Namely, although a sequence of 2D barcodes can encode substantial data, excessively large data sets may result in an impractically long sequence, leading to prolonged transfer times. To mitigate this, a portion or all of the data may be made accessible to the receiver device through another transfer mechanism. Specifically, this other transfer mechanism may involve transmitting a link, which points to the data, via the 2D barcode. The link may for example refer to an external repository, such as a cloud storage, which is internet accessible and onto which the data may be uploaded by the software component. The receiver device may then use the link to access the data, streamlining the transfer process for large data sets.

In an embodiment, the software component is further configured to:
- upload a first part of the data to an external repository;
- generate the at least one 2D barcode to include the link to the first part of the data on the external repository and an encoding of a second part of the data.

The above measures provide a hybrid transfer mechanism in which part of the data is sent via an external repository and another part of the data is sent directly via the 2D barcode(s). This hybrid transfer mechanism may address security and/or privacy concerns which otherwise may exist when transferring data via an external repository, e.g., via a cloud storage, e.g., to due to the possibility of the data being intercepted by a third party. Specifically, the security and/or privacy concerns may be addressed since part of the data is *not* sent via the external repository, and therefore the data which is sent via the external repository is incomplete and as such of lesser or no value to a third party seeking to intercept the data. The receiver device may nevertheless have access to the complete data by the 'missing' part of the data being directly received from the sender device via the 2D barcode(s). For example, the software component may be configured to send header information of a file directly via the 2D barcode(s) and the file body information via the external repository. This may contribute to security and/or privacy of the data transfer since not having the file header information may make it more difficult to decode or parse the file body information. Another example is that the software component may be configured to send personal data (such as a patient name and date of birth and address) directly to the receiver device via the 2D barcode(s) and data which is by itself not easily attributed to a person (such as a medical image or vital signs recordings) via the external repository.

In an embodiment, the software component is further configured to:
- upload to the data, or a first part of the data, to an external repository;
- determine an URL at which the data or the first part of the data can be retrieved from the external repository; and
- use the URL as the link to include in the one or more 2D barcodes.

In an embodiment, the software component is further configured to:
- before uploading, encrypt the data, or the first part of the data, using an encryption key;
- include the encryption key and the link in the at least one 2D barcode. By encrypting the data which is sent via the external repository, security and/or privacy concerns may be further mitigated. The encryption key may be transferred by the sender device to the receiver device by encoding the encryption key, together with the link, in the 2D barcode(s). The transfer by 2D barcode(s) may be difficult to eavesdrop on, as it may require an eavesdropping device to be in close vicinity of the sender device. Thereby, the overall data transfer from sender device to receiver device may be secure and convenient to use.

In an embodiment, the software component is further configured to process the data exported by the application and generate the one or more 2D barcodes based on said processed version of the data. For example, said processing may comprise one or more of: omitting a part of the data, selecting a part of the data for inclusion, adjusting a size or a quality of a part of the data, before generating the one or more 2D barcodes. In general, such processing may be used to reduce the size or otherwise optimize the data for transfer.

In an embodiment, the software component is further configured to generate the at least one 2D barcode by generating a file of the data and generate the at least one 2D barcode to comprise an encoding of the file and/or a link to the file.

In an embodiment, the system function is a print system function to enable printing of data from the applications to one or more printers, and the software component is configured to register as a virtual printer driver.

In an embodiment, the system function provides a sharing interface, such as an iOS share sheet-based interface or an Android share intent-based interface, and the software component is configured to register as a share destination in the sharing interface.

It will be appreciated by those skilled in the art that two or more of the above-mentioned embodiments, implementations, and/or optional aspects of the invention may be combined in any way deemed useful.

Modifications and variations of any system, device, computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a sender device configured for unidirectional transfer of data to a receiver device, wherein the unidirectional transfer comprises the sender device encoding data to be transmitted as respective 2D barcodes and sequentially displaying the 2D barcodes on a display, and the receiver device capturing images of the 2D barcodes and decoding the 2D barcodes so as to obtain a received version of the transmitted data;
Fig. 2 shows an application exporting data via a system function to a software component, wherein the software component is registered as an export destination with the system function and configured to generate a 2D barcode comprising or linking to the data;
Fig. 3 shows 2D barcode(s) comprising an encoding of the data;
Fig. 4 shows 2D barcode(s) comprising a link to the data on an external repository and optionally an encryption key which is used to encrypt the data;
Fig. 5 shows the 2D barcode(s) comprising a link to a first part of the data on an external repository, an encoding of a second part of the data, and optionally an encryption key used to encrypt the first part of the data;
Fig. 6 shows a print dialog box through which a virtual printer driver can be selected as print destination, wherein the virtual printer driver is configured to generate a 2D barcode comprising an encoding of, and/or a link to, the data which is printed;
Fig. 7 shows a computer-readable medium comprising data.

It should be noted that the figures are purely diagrammatic and not drawn to scale. In the figures, elements which correspond to elements already described may have the same reference numerals.

### List of reference numbers and abbreviations

The following list of reference numbers is provided for facilitating the interpretation of the drawings and shall not be construed as limiting the claims.
- 100: sender device
- 120: data storage interface
- 122: data storage
- 140: display output
- 142: display
- 160: processor subsystem

- 200: receiver device
- 220: sensor interface
- 222: image sensor
- 240: processor subsystem

- 300: application
- 320: system function
- 340: software component to generate 2D barcode(s)

- 400-402: data to be transferred
- 420: link to data
- 440: encryption key
- 500-502: 2D barcode
- 600: external repository

- 700: print dialog box
- 710: text identifier of virtual printer driver

- 800: non-transitory computer-readable medium
- 810: stored data

### DETAILED DESCRIPTION OF EMBODIMENTS

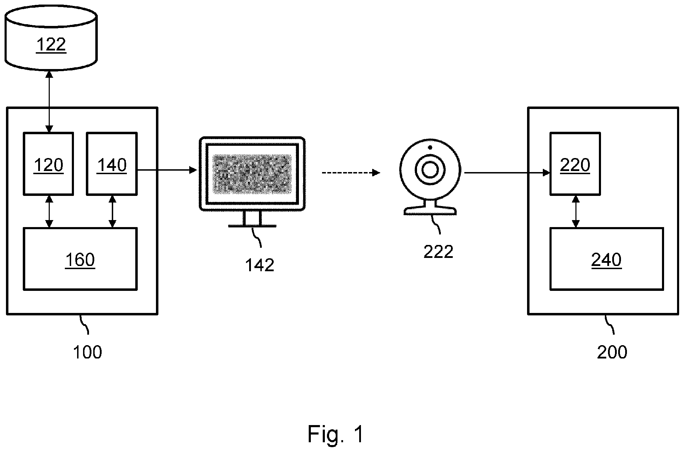

**Fig. 1** illustrates the unidirectional transfer of data from a sender device 100 to a receiver device 200. The sender device 100, which is configured for said unidirectional transfer of data to the receiver device 200, may comprise a data storage interface 120 to a data storage 122, a display output 140 to a display 142 and a processor subsystem 160 which may be configured to, during operation of the sender device 100, via the data storage interface 120, access the data to be transmitted to the receiver device, encode respective parts of the data to generate respective 2D barcodes, and via the display output 140, sequentially display the 2D barcodes on the display 142. Although not shown explicitly in Fig. 1, the sender device 100 may further comprise a memory storing instruction data defining instructions for the processor subsystem 160 to generate the 2D barcodes. The receiver device 200, which may be configured to receive data from the sender device 100, may comprise a sensor interface 220 to an image sensor 222 and a processor subsystem 240 which may be configured to, using the image sensor 222, capture the 2D barcodes which are sequentially displayed on the display 142 to obtain a series of captured images, and in each or a subset of the series of captured images, detect a position of a respective 2D barcode in the captured image, scan the 2D barcode at the identified position to obtain barcode data, and decode the barcode data to, together with the barcode data obtained from other captured images, obtain a received version of the transmitted data.

Briefly speaking, an exemplary operation of the sender device and the receiver device may be the following. Here and elsewhere, the sequence of 2D barcodes may also be referred to as a `video barcode'. The sender device may access data to be transmitted to the receiver device. The data may be generated by the sender device, or may be generated by a different device but accessible to the sender device. In particular, as also described elsewhere in this specification, the data may be exported by an application running on the sender device. The sender device may generate a video barcode and display the video barcode on its display. The receiver device may comprise a camera which is able to capture the video barcode. From the captured video data, the data which was transmitted by the sender device may be decoded. The thus-obtained data is elsewhere also referred to as a `received version' of the data and may be a bit-true copy of the data at the sender device but may also be an approximation thereof, e.g., if errors occurred during transmission. It is noted that the occurrence of such errors may be acceptable in some applications, e.g., image or video transfer, while in others, the occurrence of errors may be avoided or reduced by encoding the data using an error correction scheme.

With continued reference to the sequence of 2D barcodes, the following is noted. For data which is too large to be encoded as a single 2D barcode, respective parts of the data may be encoded to generate respective 2D barcodes. Normally, each 2D barcode may encode a different part of the data, but in some cases, there may be overlap in the data between different 2D barcodes, for example for redundancy reasons. The 2D barcode, which may also be referred to as a matrix code or matrix barcode or simply as a 2D code, may be any known type of 2D barcode, including but not limited to a QR code, a JAB code, a Data Matrix, etc. Encoding schemes for such 2D barcodes are known per se. The 2D barcodes may be displayed by the sender device on the display in a sequential manner, e.g., in a video-like manner. For example, every second or every 1/2, 1/3, 1/4, 1/5, 1/10, 1/20, 1/30, 1/60, 1/120, or 1/240 of a second, a different 2D barcode may be displayed. This way, the entirety of the data to be transferred may be displayed by the sender device in form of a series of 2D barcodes on the display. The receiver device may capture the series of 2D barcodes displayed on the display with its image sensor. For example, in case the receiver device is a mobile device with a built-in camera, the camera may be pointed at the sender device's display to capture the contents of the display. Such capture may result in a sequence of captured images, which in some embodiments may be captured by recording a video of the sender device's display. In each or at least a subset of the captured images, the receiver device may detect a position of a respective 2D barcode and then scan the 2D barcode at the identified position to obtain barcode data. Detecting the position of the 2D barcode may for example involve detecting one or more spatial markers in or in a vicinity of the 2D barcode. Scanning the 2D barcode may involve determining the value of the data elements of the 2D barcode (e.g., whether a data element assumes the value of "0" or "1" in a QR code), for example using image analysis. Once the barcode data is obtained, the barcode data may be decoded to, together with the barcode data obtained from other captured images, obtain a received version of the transmitted data. In some embodiments, the barcode data may contain redundancy, for example by the data to be transmitted being encoded using error correcting code, to be able to correct for errors in the transmission. In other embodiments, the barcode may contain the data to be transmitted without additional redundancy measures.

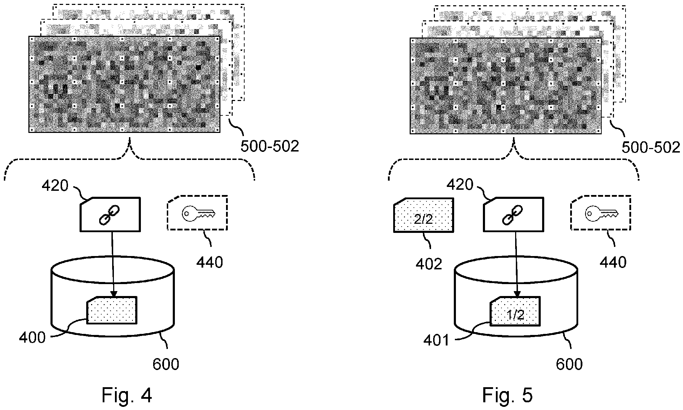

While the above refers to the data being transmitted in form of a sequence of 2D barcodes, it is noted that the sender device may also generate a single 2D barcode which provides access to the data. For example, if the data to be transmitted is small enough, a single 2D barcode may be generated to comprise an encoding of the entire data. Another example, as also described with reference to Figs. 4 and 5, is that (part of) the data may be uploaded by the sender device to an external repository, and a single 2D barcode may be generated to comprise a link to the (part of the) data on the external repository.

With continued reference to Fig. 1, it is noted that the data storage 122 may take various forms, such as a memory, a solid-state drive or an array of solid-state drives, a hard drive, or an array of hard drives, etc. The data storage interface 120 may be a type of interface which corresponds to the type of data storage, e.g., a memory interface, a solid-state drive interface, etc. By way of example, Fig. 1 shows the data storage 122 to be an external data storage, but the data storage 122 may also be an internal component of the sender device 100. Similarly, by way of example, Fig. 1 shows the display 142 to be an external display, but the display 142 may also be an internal component of the sender device 100. The display interface 140 may likewise take any suitable form, such as an internal display interface, e.g., based on MPI DSI or MDDI, or an external display interface, e.g., based on HDMI or USB-C, etc. With reference to the receiver device 200, it is noted that the image sensor 222 may be part of a camera, which may be an external camera (e.g., a webcam) or an internal camera of the receiver device 200. The sensor interface 220 may take any suitable form to receive captured image data from the image sensor 222. With reference to the processor subsystems 160, 240 of the sender device and receiver device, each of these may be embodied by a single CPU, such as a x86 or ARM-based CPU, but also by a combination of such CPUs and/or other types of processing units, such as GPUs.

Although not shown in Fig. 1, the sender device 100 and the receiver device 200 may each also comprise additional components. For example, the receiver device 200 may, like the sender device 100, also comprise a data storage interface to a data storage and/or a display interface to a display, while both the sender device 100 and the receiver device 200 may comprise a user input interface to a user input device, such as a touch screen, a keyboard, a mouse, etc., to enable a user to interact with a respective device.

In general, the functions described with reference to the processor subsystem of either the sender device 100 or the receiver device 200 may be implemented by a software component, such as a driver, a plug-in, or an application (e.g., an `app'). For example, the sender device 100 may be a computer or mobile device which is configured to execute a sender software component, while the receiver device 200 may be a computer or mobile device which is configured to execute a receiver software component, which receiver software component allows capturing the video barcode with the receiver device's camera and which then provides access to the transmitted data. In some embodiments, both the sender device 100 and the receiver device 200 may be a same type of device, e.g., a computer, mobile phone, tablet device, smart watch, etc. In other embodiments, the sender device 100 may be a different type of device than the receiver device 200.

The sender device may be configured with an operating system, such as Windows, MacOS, or Linux for PCs and laptops or iOS, Android, Tizen, HarmonyOS, or EulerOS for mobile devices. The operating system may be configured to allow execution of applications and to provide a system function to enable export of data from the applications to one or more export destinations. The one or more export destinations may be selectable by a user via a user interface provided by the operating system. The sender software component, which in the following is also simply referred to as 'software component', may be installed or preinstalled on the operating system and may be configured to register as an export destination with the system function, for example during or after installation.

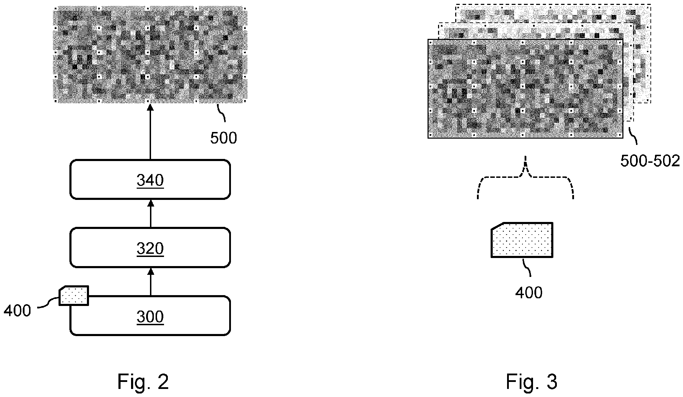

**Fig. 2** shows an exemplary operation of the software component of the sender device. Namely, an application 300 is shown which may be operated by a user. The application may be any type of application which may generate or otherwise have access to data 400. The user may seek to transfer the data 400 unidirectionally via 2D barcode(s) to the receiver device. For that purpose, the user may activate an export function from the application. Activation of the export function may for example comprise selecting the export function in a user interface of the application, pressing a keyboard shortcut, etc. The export function may for example be a print system function or a sharing function. Upon activating the export function, the user may be presented with a user interface which enables the user to select between one or more export destinations. The user interface may be generated by the operating system. By being registered with the system function 320, the software component 340 may appear as one of the export destinations. Upon selecting the software component 340 as export destination, the data 400 may be made available to the software component 340, either directly or in converted form. The software component 340 may then generate at least one 2D barcode 500 which comprises an encoding of the data and/or a link to the data, and display the at least one 2D barcode 500 on a display of the device to enable a receiver device to access the data by capturing and decoding the at least one 2D barcode.

**Figs. 3-5** illustrate different forms of 2D barcodes generated by the software component. It will be appreciated that although Figs. 3-5 refer to a sequence of 2D barcodes 500-502, the following also applies to a single 2D barcode being generated.

**Fig. 3** shows 2D barcodes 500-502 comprising an encoding of the data 400. This way, the data 400 may be transferred to the receiver device without utilizing an external repository. It is noted that in some embodiments, the software component may first process the data exported by the application and include a processed version of the data in the 2D barcodes 500-502. For example, the software component may omit a part of the data, select a part of the data for inclusion, and/or adjust a size or a quality of a part of the data, etc. Adjusting the size of data may comprise compressing the data, e.g., using lossy and/or lossless compression. In a specific example, the software component may use lossy compression and/or resolution downscaling for images contained in the exported data and use lossless compression or no compression for other parts of the exported data.

**Fig. 4** shows 2D barcodes 500-502 comprising a link to the data 400 on an external repository 600. This may be further explained as follows. Instead of including the exported data directly in the 2D barcodes 500-502, the software component may instead upload the exported data 400 to the external repository and include a link 420 to the data 400 in the 2D barcodes 500-502. For example, the software component may, after uploading the data, determine an URL at which the data can be retrieved from the external repository 600 and include the URL as the link in the 2D barcodes 500-502. In some embodiments, the software component may, before uploading the data to the external repository 600, encrypt the data 400 using an encryption key 440. For that purpose, any known encryption scheme may be used. The data 400 uploaded to the external repository may thus be encrypted data. In such embodiments, the software component may, in addition to the link 420, also include the encryption key 440 in the 2D barcodes. The receiver device may thus obtain the link 420 to the data and the encryption key 440 to decode the data. In this respect, it is noted that, as in the example of Fig. 3, also in the example of Fig. 4 the data uploaded to the external repository 600 may be a processed version of the original data exported by the application.

**Fig. 5** shows the 2D barcode(s) comprising a link 400 to a first part of the data 401 on an external repository 600 and an encoding of a second part of the data 402. This may be further explained as follows. Instead of transmitting the data exclusively via the 2D barcodes 500-502 or exclusively via the external repository, a hybrid transfer mechanism may be used in which part of the data 402 is transmitted via the 2D barcodes 500-502 and part of the data 401 is transmitted via the external repository 600. To enable the receiver device to access the data on the external repository, a link 420 to the data 401 on the external repository 600 may be included in the 2D barcodes 500-502. The decision which part of the data to send via the 2D barcodes 500-502 and which part of the data to send via the external repository 600 may depend on various factors. For example, when the data to be transmitted comprises a header and a body, e.g., as with a file, the software component may include the header of the data in the 2D barcodes 500-502 and transmit the body of the data via the external repository 600. Another example is that privacy sensitive data, such as personal data, may be transmitted via the 2D barcodes 500-502 while privacy less sensitive or privacy insensitive data may be transmitted via the external repository 600. Yet another example is that the data to be transmitted may be divided in such a way that the part of the data which is sent via the external repository 600 is not or difficult to reconstruct without having access to the part of the data which is sent via the 2D barcodes 500-502.

In some embodiments, the software component may, before uploading the data 401 to the external repository 600, encrypt the data 401 using an encryption key 440. In such embodiments, the software component may, in addition to the link 420, also include the encryption key 440 in the 2D barcodes. The receiver device may thus obtain the link 420 to the data and the encryption key 440 to decode the data 401. In this respect, it is noted that, as in the example of Fig. 3, also in the example of Fig. 5 the data transmitted by the software component may be a processed version of the original data exported by the application.

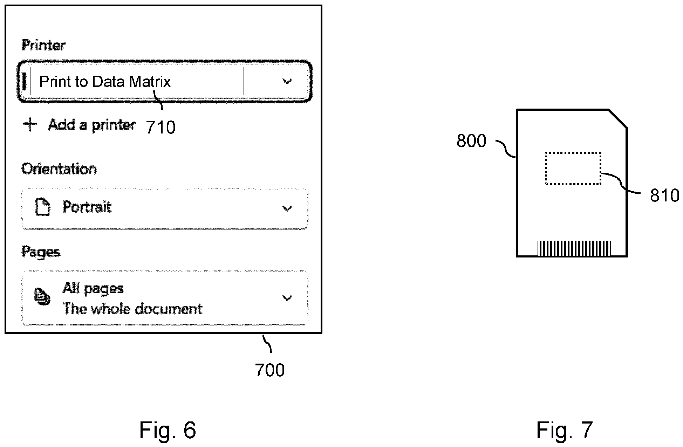

**Fig. 6** shows a print dialog box 700 through which a virtual printer driver 710 may be selected as print destination. This may be further explained as follows. The system function utilized by the software component may be a print system function to enable printing of data from applications to one or more printers. In such an embodiment, the software component may be configured to register as a virtual printer driver with the print system function. Accordingly, when selecting 'print' in an application, the user may be presented with the print dialog box 700 through which the virtual printer driver 710 may be selected.

It is noted that in the example of Fig. 6, the virtual printer driver is textually identified as `Print to Data Matrix' with `data matrix' being another term for 2D barcode. Upon confirming the selection, the data of the application may be exported via the print system function to the virtual printer driver, for example in a format such as GDI or XPS, and the virtual printer driver may generate the 2D barcode(s) and display the 2D barcode(s) on the display, for example in a separate window or full-screen. In some examples, the software component may, upon receiving access to the data from the application, generate a file of the data and transmit the file using the 2D barcode(s), e.g., directly as an encoding or by including a link to the file. Such file generation may also comprise data conversion. For example, the aforementioned GDI or XPS data may be converted by the virtual printer driver to another format, such as PDF, and then transmitted in this other format.

Another example of a system function is sharing interface, such as an iOS share sheet-based interface or an Android share intent-based interface. In such an embodiment, the software component may be configured to register as a share destination in the sharing interface. Upon selecting the software component as sharing destination, the data of the application may be exported to the software component, and the software component may generate the 2D barcode(s) and display the 2D barcode(s) on the display, for example in a separate window or full-screen. It is further noted that the file generation and data conversion described with reference to Fig. 6 may also apply to the export via a sharing interface, or in general to any other embodiment of the software component.

In general, each entity described in this specification may be embodied as, or in, a device or apparatus. The device or apparatus may comprise one or more (micro)processors which execute appropriate software. The processor(s) of a respective entity may be embodied by one or more of these (micro)processors. Software implementing the functionality of a respective entity may have been downloaded and/or stored in a corresponding memory or memories, e.g., in volatile memory such as RAM or in non-volatile memory such as Flash. Alternatively, the processor(s) of a respective entity may be implemented in the device or apparatus in the form of programmable logic, e.g., as a Field-Programmable Gate Array (FPGA). Any input and/or output interfaces may be implemented by respective interfaces of the device or apparatus. Each functional unit of a respective entity may be implemented in the form of a circuit or circuitry. A respective entity may also be implemented in a distributed manner, e.g., involving different devices or apparatus.

It is noted that any of the methods described in this specification, for example in any of the claims, may be implemented on a computer as a computer implemented method, as dedicated hardware, or as a combination of both. Instructions for the computer, e.g., executable code, may be stored on a computer-readable medium 800 as for example shown in **Fig. 7****,** e.g., in the form of a series 810 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc. Fig. 7 shows by way of example a memory device 800.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A software component (340) for processing data on a device (100), wherein the device is configured with an operating system, wherein the operating system is configured to allow execution of applications and to provide a system function (320) to enable export of data from the applications to one or more export destinations, wherein the one or more export destinations are selectable by a user via a user interface (700) provided by the operating system, wherein the software component is configured to be installed on the operating system and to:
- register as an export destination with the system function;
- receive an export of data (400-402) of an application (300) via the system function;
- generate at least one 2D barcode (500-502), wherein the at least one 2D barcode comprises an encoding of the data and/or a link to the data; and
- display the at least one 2D barcode on a display (142) of the device to enable a receiver device (200) to access the data by capturing and decoding the at least one 2D barcode.

2. The software component (340) according to claim 1, further configured to generate and display a sequence of 2D barcodes (500-502) which together comprise the encoding of the data.

3. The software component (340) according to claim 1 or 2, further configured to, based on a characteristic of the data or a setting, switch between including, in the at least one 2D barcode, i) the encoding of the data (400, 401) and ii) the link (420) to the data.

4. The software component (340) according to claim 3, wherein the characteristic of the data is a size of the data.

5. The software component (340) according to any one of claims 1 to 4, further configured to:
- upload a first part of the data (401) to an external repository (600);
- generate the at least one 2D barcode (500-502) to include the link (420) to the first part of the data on the external repository and an encoding of a second part of the data (402).

6. The software component (340) according to any one of claims 1 to 5, further configured to:
- upload to the data (400), or a first part of the data (401), to an external repository (600);
- determine an URL at which the data or the first part of the data can be retrieved from the external repository; and
- use the URL as the link (420) to include in the one or more 2D barcodes (500-502).

7. The software component (340) according to claim 5 or 6, further configured to:
- before uploading, encrypt the data (400), or the first part of the data (401), using an encryption key (440);
- include the encryption key and the link (420) in the at least one 2D barcode.

8. The software component (340) according to any one of claims 1 to 7, further configured to process the data exported by the application (300) and generate the one or more 2D barcodes (500-502) based on said processed version of the data.

9. The software component (340) according to claim 8, wherein said processing comprises one or more of: omitting a part of the data, selecting a part of the data for inclusion, adjusting a size or a quality of a part of the data, before generating the one or more 2D barcodes.

10. The software component (340) according to any one of claims 1 to 9, further configured to generate the at least one 2D barcode (500-502) by generating a file of the data and generate the at least one 2D barcode to comprise an encoding of the file and/or a link to the file.

11. The software component (340) according to any one of claims 1 to 10, wherein the system function (320) is a print system function to enable printing of data from the applications to one or more printers, and wherein the software component is configured to register as a virtual printer driver (710).

12. The software component (340) according to any one of claims 1 to 10, wherein the system function (320) provides a sharing interface, such as an iOS share sheet-based interface or an Android share intent-based interface, and wherein the software component is configured to register as a share destination in the sharing interface.

13. A device (100) comprising a memory, a processor system (160) and a display (142), wherein the device is configured with an operating system, wherein the operating system is configured to allow execution of applications and to provide a system function (320) to enable export of data from the applications to one or more export destinations, wherein the one or more export destinations are selectable by a user via a user interface (700) provided by the operating system, wherein the memory comprises data representing the software component (340) according to any one of claims 1 to 12, wherein the processor system is configured to, using the operating system, install and execute the software component.

14. A computer-implemented method for processing data on a device (100), wherein the device is configured with an operating system, wherein the operating system is configured to allow execution of applications and to provide a system function (320) to enable export of data from the applications to one or more export destinations, wherein the one or more export destinations are selectable by a user via a user interface (700) provided by the operating system, wherein the computer-implemented method comprises, at the device:
- registering as an export destination with the system function;
- receiving an export of data (400-402) of an application (300) via the system function;
- generating at least one 2D barcode (500-502), wherein the at least one 2D barcode comprises an encoding of the data and/or a link to the data; and
- displaying the at least one 2D barcode on a display (142) of the device to enable a receiver device (200) to access the data by capturing and decoding the at least one 2D barcode.

15. A transitory or non-transitory computer-readable medium (800), wherein the computer-readable medium comprises data (810) representing:
- a software component according to any one of claims 1 to 12; or
- instructions arranged to cause a processor system to perform the computer-implemented method according to claim 14.
